# EUROPÄISCHE PATENTSCHRIFT

(11) **EP 3 202 647 B1**
(45) Veröffentlichungstag und Bekanntmachung des Hinweises auf die Patenterteilung: **13.01.2021**
(21) Anmeldenummer: 17154333.3
(22) Anmeldetag: 02.02.2017
(51) Int. Cl.: B62D 35/02

(54) **TUNNELVERKLEIDUNG ZUR STRÖMUNGSKONTROLLE BEI KRAFTFAHRZEUGEN UND KRAFTFAHRZEUG MIT EINER TUNNELVERKLEIDUNG**
TUNNEL LINING FOR CONTROLLING THE FLOW OF MOTOR VEHICLES AND MOTOR VEHICLE WITH A TUNNEL LINING
REVÊTEMENT DE TUNNEL DESTINÉ AU RÉGLAGE DE DÉBIT POUR DES VÉHICULES AUTOMOBILES ET VÉHICULE AUTOMOBILE ÉQUIPÉ D'UN REVÊTEMENT DE TUNNEL

(30) Priorität: 03.02.2016 DE 102016101906
(43) Veröffentlichungstag der Anmeldung: 09.08.2017
(73) Patentinhaber: VOLKSWAGEN AKTIENGESELLSCHAFT, 38440 Wolfsburg (DE); Deutsches Zentrum Für Luft- Und Raumfahrt E.V. (DLR), 51147 Köln (DE)
(72) Erfinder: Lange, Sven, 38518 Gifhorn (DE); Loose, Sigfried, 51147 Köln-Porz (DE); Wagner, Claus, 51147 Köln-Porz (DE); Barth, Tarik, 38440 Wolfsburg (DE)
(74) Vertreter: Bals, Rüdiger

(56) Entgegenhaltungen:
- EP-A2- 1 216 914
- EP-A2- 1 382 512
- DE-A1- 3 410 296
- DE-A1- 3 617 538
- DE-A1-102009 054 091
- DE-A1-102010 036 446

## Beschreibung

Die Erfindung betrifft eine Tunnelverkleidung zur Strömungskontrolle bei Kraftfahrzeugen zum Abdecken eines in Fahrzeuglängsrichtung vorderen Tunnelbereichs eines Abgastunnels eines Unterbodens eines Kraftfahrzeugs sowie ein Kraftfahrzeug aufweisend eine derartige Tunnelverkleidung.

Es ist bekannt, dass bei Kraftfahrzeugen, insbesondere bei Personenkraftwagen, die zur Kühlung des Motors durch den Kühler geleitete Kühlungsluft dem Motorraum abgeführt und einer Umströmung des Kraftfahrzeugs wieder zugeführt wird. Tunnelverkleidungen werden vorrangig zur Glättung des Unterbodens eingesetzt, um der Unterbodenströmung ein verlustarmes Abströmen zu ermöglichen. Dies betrifft auch die gewöhnliche Tunnelverkleidung, weshalb sie nicht nur zur gezielten Leitung der Kühlluft eingesetzt wird. Dies erfolgt beispielsweise durch ein ungerichtetes Auslassen der Kühlungsluft durch vordere Radhäuser und durch einen Abgastunnel im Unterboden des Kraftfahrzeugs. Zum Leiten der Kühlungsluft in den Abgastunnel weisen Kraftfahrzeuge oftmals eine plattenförmige Tunnelverkleidung auf, die einen dem Motorraum benachbarten Teil des Abgastunnels nach unten zur Fahrbahn hin abdeckt und an einen Hilfsrahmen des Kraftfahrzeugs angebunden ist.

Derartige Verkleidungsteile sind beispielsweise aus der DE 10 2009 054 091 A1, der EP 1 216 914 A2, der DE 10 2010 036 446 A1, der DE 34 10 296 A1, der DE 36 17 538 A1 sowie der EP 1 382 512 A2 bekannt.

Derartige Tunnelverkleidungen haben den Nachteil, dass die aus dem Motorraum abgeführte Kühlungsluft mit Fahrzeugbauteilen, wie z.B. einem Getriebegehäuse oder einem Kraftstofftank, zusammentreffen und hierdurch einen Gesamtluftwiderstand des Kraftfahrzeugs vergrößern. Hierdurch werden Fahreigenschaften sowie ein Kraftstoffverbrauch des Kraftfahrzeugs negativ beeinflusst. Ferner wird hierdurch ein Kühlungsluftstrom durch den Kühler gehemmt.

Es ist daher die Aufgabe der vorliegenden Erfindung, eine Tunnelverkleidung für ein Kraftfahrzeug sowie ein Kraftfahrzeug mit einer Tunnelverkleidung bereitzustellen, die die aus dem Stand der Technik bekannten Nachteile beheben bzw. zumindest teilweise beheben. Insbesondere ist es die Aufgabe der vorliegenden Erfindung, eine Tunnelverkleidung für ein Kraftfahrzeug sowie ein Kraftfahrzeug mit einer Tunnelverkleidung zu schaffen, die auf einfache sowie kostengünstige Art und Weise einen Gesamtluftwiderstand des Kraftfahrzeugs reduzieren, Fahreigenschaften verbessern und/oder einen Kühlungsluftstrom durch den Motorraum vergrößern.

Voranstehende Aufgabe wird durch die Patentansprüche gelöst. Die Aufgabe wird insbesondere gelöst durch eine Tunnelverkleidung mit den Merkmalen des Anspruchs 1 sowie durch ein Kraftfahrzeug mit den Merkmalen des Anspruchs 9. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Tunnelverkleidung beschrieben sind, selbstverständlich auch im Zusammenhang mit dem erfindungsgemäßen Kraftfahrzeug und jeweils umgekehrt, so dass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch eine Tunnelverkleidung zum Abdecken eines in Fahrzeuglängsrichtung vorderen Tunnelbereichs eines Abgastunnels eines Unterbodens eines Kraftfahrzeugs. Die Tunnelverkleidung weist einen in Fahrzeuglängsrichtung vorderen Verkleidungsbereich sowie einem in Fahrzeuglängsrichtung hinteren Verkleidungsbereich auf. Ferner weist die Tunnelverkleidung eine im eingebauten Zustand dem Unterboden zugewandte Bodenwandung sowie mindestens zwei auf der Bodenwandung angeordnete Seitenwände auf. Durch die Seitenwände und die Bodenwandung ist ein zentraler Kanal begrenzt, wobei ein erster Kanalquerschnitt des zentralen Kanals in dem vorderen Verkleidungsbereich kleiner als ein zweiter Kanalquerschnitt des zentralen Kanals in dem hinteren Verkleidungsbereich der Tunnelverkleidung ausgebildet ist.

Eine Tunnelverkleidung ist erfindungsgemäß eine Vorrichtung zum Abdecken eines vorderen Tunnelbereichs eines Abgastunnels eines Kraftfahrzeugs. Unter Abdecken des Tunnelbereichs wird erfindungsgemäß ein seitliches Begrenzen des Tunnelbereichs verstanden, so dass ein aus den Motorraum in Richtung Fahrbahn strömender Kühlungsluftstrom durch die Tunnelverkleidung zumindest teilweise zum Abgastunnel hin abgelenkt bzw. geführt wird. Tunnelverkleidungen werden auch zu Glättung des Unterbodens verwendet. Hierdurch wird die Unterbodenströmung weniger gestört. Der in Fahrzeuglängsrichtung vordere Verkleidungsbereich der Tunnelverkleidung ist im eingebauten Zustand einem Fahrzeugbug der in Fahrzeuglängsrichtung hintere Verkleidungsbereich der Tunnelverkleidung einem Fahrzeugheck zugewandt. Den Motorraum durchströmende Kühlungsluft wird demnach nach Verlassen des Motorraums zunächst den vorderen Verkleidungsbereich der Tunnelverkleidung und anschließend den hinteren Verkleidungsbereich der Tunnelverkleidung passieren.

Die erfindungsgemäße Tunnelverkleidung weist eine Bodenwandung mit zwei Seitenkanten auf, an denen jeweils eine Seitenwand angeordnet ist. Die Seitenwände sind senkrecht oder schräg auf der Bodenwandung angeordnet. Somit weist die Tunnelverkleidung einen u-förmigen oder im Wesentlichen u-förmigen Querschnitt auf. Auf diese Weise ist zwischen den Seitenwänden und der Bodenwandung ein zentraler Kanal zum Durchleiten des durch den Kühler strömenden Kühlungsluftstroms begrenzt. Der zentrale Kanal weist im vorderen Verkleidungsbereich einen ersten Kanalquerschnitt und im hinteren Verkleidungsbereich einen zweiten Kanalquerschnitt auf. Den Motorraum durchströmende Kühlungsluft wird demnach nach Verlassen des Motorraums zumindest teilweise in den zentralen Kanal einströmen und durch den zweiten Kanalquerschnitt aus dem zentralen Kanal herausströmen. Ein anderer Teil der Kühlungsluft kann ggf. durch ein vorderes Radhaus und Spalte des Unterbodens sowie der Karosserie des Kraftfahrzeugs durchströmen. Ein Einströmen des Kühlungsluftstroms in den zentralen Kanal kann erfindungsgemäß zumindest teilweise durch den ersten Kanalquerschnitt erfolgen.

Erfindungsgemäß ist vorgesehen, dass der zweite Kanalquerschnitt größer als der erste Kanalquerschnitt ist. Dabei ist bevorzugt, dass sich ein Kanalquerschnitt zwischen dem ersten Kanalquerschnitt und dem zweiten Kanalquerschnitt kontinuierlich, insbesondere gleichmäßig und/oder linear, vergrößert. Es kann auch vorgesehen sein, dass eine Veränderung einer Breite des zentralen Kanals unabhängig von einer Veränderung einer Höhe des zentralen Kanals erfolgt.

Durch eine derartige Ausbildung der Kanalquerschnitte des zentralen Kanals weist die Tunnelverkleidung Eigenschaften eines Diffusors auf. Der erste Kanalquerschnitt und der zweite Kanalquerschnitt weisen vorzugsweise eine rechteckige oder trapezförmige Querschnittfläche auf. Vorzugsweise weist der zentrale Kanal über dessen gesamte Länge eine derartige Querschnittsfläche auf.

Im eingebauten Zustand sind die Seitenwände dem Unterboden des Kraftfahrzeugs zugewandt und die Bodenwandung von dem Unterboden zumindest teilweise beabstandet. Dabei ist bevorzugt, dass der Bodenwandung abgewandte Seitenwandoberkanten der Seitenwände am Unterboden des Kraftfahrzeugs montierbar, insbesondere anschraubbar und/oder anschweißbar, ausgebildet sind. Hierfür kann vorgesehen sein, dass die Seitenwände mindestens eine Befestigungsvorrichtung zum Anbinden an den Unterboden aufweisen. Vorzugsweise sind die Seitenwandoberkanten derart ausgebildet, spaltfrei, vorzugsweise über deren komplette Länge bzw. im Wesentlichen über deren komplette Länge, an einem Unterboden eines Kraftfahrzeugs angeordnet zu werden, so dass seitlich zur Fahrzeuglängsrichtung kein Kühlungsluftstrom zwischen Seitenwand und Unterboden entweichen kann.

Überdies ist bevorzugt, dass die Tunnelverkleidung an einen vorderen Hilfsrahmen des Kraftfahrzeugs anbindbar, insbesondere anschraubbar und/oder anschweißbar, ist. Hierfür kann vorgesehen sein, dass die Seitenwände mindestens eine Befestigungsvorrichtung zum Anbinden an den vorderen Hilfsrahmen aufweisen. Die Tunnelverkleidung ist vorzugsweise einteilig ausgebildet, wie z.B. aus einem umgeformten Blech, als additiv gefertigtes Bauteil, wie z.B. ein Lasersinterbauteil und/oder ein faserverstärktes Bauteil, insbesondere ein CFK-Bauteil. Alternativ kann die Tunnelverkleidung auch als Kunststoffteil oder Vlies ausgebildet sein.

Durch die erfindungsgemäße Ausbildung der Tunnelverkleidung ist ein den Motorraum durchströmender Kühlungsluftstrom nach dem Verlassen des Motorraums zumindest teilweise ablenkbar bzw. auffächerbar. Der Kühlungsluftstrom ist dabei vorzugsweise derart ablenkbar bzw. auffächerbar, dass ein Teil des Kühlungsluftstroms in den Abgastunnel und ein Teil des Kühlungsluftstroms seitlich am Abgastunnel vorbei und/oder unter den Abgastunnel zwischen Unterboden des Kraftfahrzeugs und der Fahrbahn strömt.

Die erfindungsgemäße Tunnelverkleidung hat gegenüber bekannten Tunnelverkleidungen den Vorteil, dass durch die Ablenkung bzw. Auffächerung des Kühlungsluftstroms ein geringerer Anteil des Kühlungsluftstroms gegen Fahrzeugbauteile im Abgastunnel trifft. Ein den Motorraum verlassender Kühlungsluftstrom erfährt somit einen geringeren Widerstand, so dass beispielsweise mehr Kühlungsluft den Kühler durchströmen kann. Überdies wird hierdurch ein Luftwiderstand des Kraftfahrzeugs auf vorteilhafte Weise reduziert. Hierdurch kann beispielsweise ein Kraftstoffverbrauch des Kraftfahrzeugs reduziert werden. Ferner können durch ein derartiges Ablenken bzw. Auffächern des Kühlungsluftstroms Auftriebsbeiwerte des Kraftfahrzeugs gezielt beeinflusst werden. Auf diese Weise sind Fahreigenschaften des Kraftfahrzeugs verbesserbar. Ferner hat die erfindungsgemäße Tunnelverkleidung den Vorteil, dass diese kostengünstig sowie mit einfachen Mitteln herstellbar sowie leicht am Kraftfahrzeug montierbar ist.

Erfindungsgemäß weist die Bodenwandung ferner eine trapezförmige oder im Wesentlichen trapezförmige Grundfläche mit zwei Schenkeln und zwei parallelen Grundseiten auf, wobei die Seitenwände an bzw. auf den Schenkeln angeordnet sind. Ein erster Winkel, der zwischen einer im vorderen Verkleidungsbereich angeordneten vorderen Grundseite und einem ersten Schenkel ausgebildet ist, ist größer als ein zweiter Winkel, der zwischen der vorderen Grundseite und einem zweiten Schenkel ausgebildet ist. Erfindungsgemäß ist es demnach bevorzugt, dass die Bodenwandung eine Breite aufweist, die sich vom vorderen Verkleidungsbereich zum hinteren Verkleidungsbereich hin vergrößert. Ein Abstand der Seitenwände vergrößert sich somit entsprechend. Entsprechend vergrößert sich die Breite des Kanalquerschnitts, da eine Breite der Bodenwandung bzw. ein Abstand der Seitenwände einer Breite des zentralen Kanals entspricht. Auf diese Weise ist der Kühlungsluftstrom seitlich auffächerbar. Ferner ist es erfindungsgemäß bevorzugt, dass die Bodenwandung asymmetrisch aufgebaut und einer Fahrzeuggeometrie angepasst ist, da hierdurch eine besonders vorteilhafte Auffächerung bzw. Ablenkung des Kühlungsluftstroms erzielbar ist. Dies ist insbesondere von Vorteil, wenn z.B. eine Abgasanlage asymmetrisch aufgebaut ist. Es ist aber auch möglich, dass die Bodenwandung rechteckig ausgeführt ist, so dass die Seiten parallel zueinander verlaufen.

Gemäß einer bevorzugten Fortbildung der Erfindung kann vorgesehen sein, dass der erste Kanalquerschnitt eine geringere Breite als der zweite Kanalquerschnitt aufweist. Dies kann beispielsweise bedeuten, dass die Bodenwandung im vorderen Verkleidungsbereich eine geringere Breite als im hinteren Verkleidungsbereich aufweist. Durch eine derartige Ausbildung weitet sich der Kanal von dem vorderen Verkleidungsbereich zum hinteren Verkleidungsbereich hin seitlich auf. Ein Kühlungsluftstrom ist somit seitlich auffächerbar bzw. ablenkbar. Durch das Auffächern oder seitliche Ablenken des Kühlungsluftstroms strömt mehr Kühlungsluft des Kühlungsluftstroms an zentral im Abgaskanal angeordneten Fahrzeugbauteilen vorbei. Hierdurch werden ein Luftwiderstand des Kraftfahrzeugs verbessert sowie der durch den Motorraum strömende Kühlungsluftstrom vergrößert. Das Auffächern des Kühlluftvolumenstromes ermöglicht es, die Kühlluft in einem breiten Bereich flach am Unterboden der Umströmung störungsarm zuzugeben. Hierbei kann die Kühlluft ohne größere Behinderung über den Unterboden in das Heckgebiet strömen. Die Umströmung am Unterboden wird im Bereich der Tunnelverkleidung beschleunig und senkt dadurch den statischen Druck am Ende der Tunnelverkleidung. Hierdurch wird das das Duckgefälle zwischen Kühlluftein- und Kühlluftauslass positiv beeinflusst, was zu einer Erhöhung des Kühlluftvolumenstromes führt.

In einer vorteilhaften Weiterbildung der Erfindung beträgt der erste Winkel zwischen 90° und 117° und der zweite Winkel zwischen 90° und 110°. Besonders bevorzugt betragen der erste Winkel 114° und der zweite Winkel 107°. Es hat sich gezeigt, dass bei derartigen Winkeln eine besonders günstige Auffächerung bzw. Ablenkung des Kühlungsluftstroms erzielbar und somit eine besonders große Reduzierung des Gesamtluftwiderstands des Kraftfahrzeugs sowie besonders große Erhöhung des Kühlungsluftstroms durch den Motorraum erreichbar sind.

Es ist bevorzugt, dass der erste Kanalquerschnitt eine geringere Höhe als der zweite Kanalquerschnitt aufweist. Das bedeutet, dass die Seitenwände im vorderen Verkleidungsbereich eine geringere Höhe als im hinteren Verkleidungsbereich aufweisen, da die Höhe der Seitenwände der Höhe des zentralen Kanals entspricht. Dies kann beispielsweise durch ein Abknicken der Bodenwandung von dem Unterboden des Fahrzeugs weg erfolgen. Die Tunnelverkleidung kann erfindungsgemäß auch derart ausgebildet sein, dass in derartiges Abknicken verstellbar und somit an Fahrsituationen des Kraftfahrzeugs anpassbar ist. Hierdurch kann beispielsweise eine Bodenfreiheit des Kraftfahrzeugs zur Fahrbahn vergrößert werden. Da eine Seite des zentralen Kanals durch den Unterboden des Kraftfahrzeugs begrenzt ist, ist durch eine derartige Ausbildung des zentralen Kanals der Kühlungsluftstrom bzw. ein Teil des Kühlungsluftstroms vom Unterboden des Kraftfahrzeugs ablenkbar bzw. zur Fahrbahn hin lenkbar. Hierdurch entsteht weniger Luftwiderstand durch Fahrzeugbauteile am Unterboden des Kraftfahrzeugs, da nunmehr weniger Kühlungsluft gegen diese Fahrzeugbauteile, wie z.B. Getriebegehäuse, Tank oder Abgasanlage, strömt. Überdies ist ein Abtrieb des Kraftfahrzeugs hierdurch beeinflussbar und somit gezielt beeinflussbar bzw. durch eine entsprechende Gestaltung der Tunnelverkleidung optimierbar. Des Weiteren ist ein Kühlungsluftstrom durch den Motorraum vergrößerbar.

Weiter bevorzugt weisen die Seitenwände jeweils eine der Bodenwandung abgewandte Seitenwandoberkante und eine auf der Bodenwandung angeordnete Seitenwandunterkante auf, wobei die Seitenwandoberkante und die Seitenwandunterkante einen Keilwinkel zwischen 0° und 7° zueinander aufweisen und sich vom vorderen Verkleidungsbereich zum hinteren Verkleidungsbereich hin voneinander entfernen. Zusätzlich oder alternativ weist der zweite Kanalquerschnitt eine Höhe auf, die zwischen 4 cm und 6 cm, insbesondere um 5 cm, größer als eine Höhe des ersten Kanalquerschnitts ist. Demnach ist eine Hauptfläche der Seitenwände beispielsweise dreieckig oder trapezförmig ausgebildet. Eine Hauptfläche ist im Sinne der Erfindung eine Fläche eines Körpers mit dem größten Flächeninhalt. Durch eine derartige Ausbildung der Seitenwände ist eine stetige Aufweitung des zentralen Kanals vom vorderen Verkleidungsbereich zum hinteren Verkleidungsbereich hin erzielbar, so dass im Kühlungsluftstrom keine bzw. nur geringe Turbulenzen entstehen. Hierdurch wird der Luftwiderstand positiv beeinflusst.

Erfindungsgemäß kann vorgesehen sein, dass innerhalb des zentralen Kanals mindestens ein zum Umlenken eines Kühlungsluftstroms in Richtung mindestens einer Seitenwand angeordnet ist. Das Umlenkelement kann beispielsweise entsprechend einer Leitschaufel einer Turbine ausgebildet sein. Das Umlenkelement ist vorzugsweise derart ausgebildet, keine bzw. nur geringe Turbulenzen im Kühlungsluftstrom zu bewirken. Vorzugsweise ist das Umlenkelement derart ausgebildet, den Kühlungsluftstrom aufzuteilen, wobei jeder Teil des Kühlungsluftstroms zu einer anderen Seitenwand umgeleitet wird. Weiter bevorzugt ist das Umlenkelement verstellbar ausgebildet.

Zusätzlich oder alternativ kann erfindungsgemäß vorgesehen sein, dass das Umlenkelement ausgebildet ist, den Kühlungsluftstrom vom Unterboden weg zu leiten. Ein derartiges Umlenkelement ist vorzugsweise verstellbar ausgebildet. Ein Umlenkelement hat den Vorteil, dass der Kühlungsluftstrom gezielt beeinflussbar, insbesondere in Abhängigkeit einer Fahrsituation, wie z.B. Fahrgeschwindigkeit, Windgeschwindigkeit und -richtung, Temperatur, Luftfeuchte, Fahrbahnbeschaffenheit, fahrerspezifische Fahrdynamikansprüche und dergleichen.

Vorzugsweise sind ein dem vorderen Verkleidungsbereich zugewandter Anfang des Umlenkelements in einer Kanalmitte des zentralen Kanals und ein dem hinteren Verkleidungsbereich zugewandtes Ende des Umlenkelements von der Kanalmitte beabstandet. Auf diese Weise ist der Kühlungsluftstrom besonders vorteilhaft ablenkbar.

Gemäß einem zweiten Aspekt der Erfindung wird die Aufgabe erfindungsgemäß gelöst durch ein Kraftfahrzeug mit einem Unterboden und einem zentral in dem Unterboden angeordneten Abgastunnel. An einem in Fahrzeuglängsrichtung vorderen Tunnelbereich des Abgastunnels ist eine erfindungsgemäße Tunnelverkleidung angeordnet. Im Abgastunnel ist beispielsweise eine Abgasanlage, aufweisend mindestens ein Abgasrohr mit einer Schalldämpfvorrichtung, angeordnet. Überdies kann erfindungsgemäß vorgesehen sein, dass ein Teil eines Getriebegehäuses und/oder ein Teil eines Kraftstofftanks im Abgastunnel angeordnet sind.

Bei dem beschriebenen Kraftfahrzeug ergeben sich sämtliche Vorteile, die bereits zu einer Tunnelverkleidung gemäß dem ersten Aspekt der Erfindung beschrieben worden sind.

Es ist bevorzugt, dass ein vorderer Verkleidungsbereich der Tunnelverkleidung an einem vorderen Hilfsrahmen des Kraftfahrzeugs angeordnet ist. Der vordere Hilfsrahmen ist am Motorraum des Kraftfahrzeugs angeordnet. Somit ist die Tunnelverkleidung am Motorraum angeordnet, so dass der den Motorraum verlassende Kühlungsluftstrom an der Tunnelverkleidung vorbei strömt. Hierdurch wird eine besondere effiziente Umleitung bzw. Auffächerung des Kühlungsluftstroms durch die Tunnelverkleidung auf einfache Weise sowie kostengünstig erzielt. Eine Montage der Tunnelverkleidung am vorderen Hilfsrahmen ist problemlos möglich.

Die Tunnelverkleidung ist vorzugsweise an eine Ausbildung des Kraftfahrzeugs, insbesondere dessen Unterbodens sowie den daran angeordneten Fahrzeugbauteilen angepasst. Demnach weist die Tunnelverkleidung fahrzeugspezifische Merkmale, wie insbesondere Breite und Höhe des vorderen Kanalquerschnitts sowie des hinteren Kanalquerschnitts, Größe des Keilwinkels, Länge der Bodenwandung in Fahrzeuglängsrichtung, auf.

Eine erfindungsgemäße Tunnelverkleidung zum Abdecken eines in Fahrzeuglängsrichtung vorderen Tunnelbereichs eines Abgastunnels eines Unterbodens eines Kraftfahrzeugs sowie ein erfindungsgemäßes Kraftfahrzeug werden nachfolgend anhand von Zeichnungen näher erläutert. Gleiche Bauteile sind mit denselben Bezugszeichen versehen. Es zeigen jeweils schematisch:
- Figur 1: in einer Draufsicht eine bevorzugte erste Ausführungsform einer erfindungsgemäßen Tunnelverkleidung;
- Figur 2: in einer geschnittenen Seitenansicht die bevorzugte erste Ausführungsform der erfindungsgemäßen Tunnelverkleidung aus Figur 1;
- Figur 3: in einer Draufsicht eine bevorzugte zweite Ausführungsform einer erfindungsgemäßen Tunnelverkleidung;
- Figur 4: in einer geschnittenen Seitenansicht die bevorzugte zweite Ausführungsform der erfindungsgemäßen Tunnelverkleidung aus Figur 3;
- Figur 5: in einer Seitenansicht eine bevorzugte Ausführungsform eines erfindungsgemäßen Kraftfahrzeugs; und
- Figur 6: in einer Draufsicht von unten die bevorzugte Ausführungsform eines erfindungsgemäßen Kraftfahrzeugs aus Figur 5.

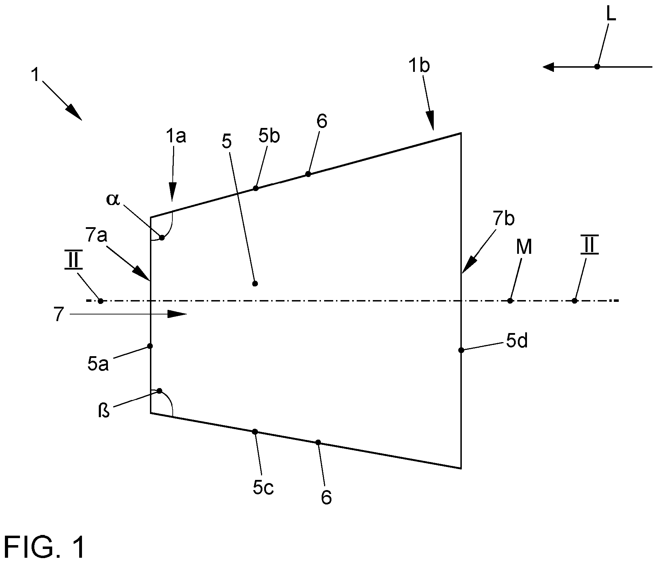

In Fig.1 ist eine bevorzugte erste Ausführungsform einer erfindungsgemäßen Tunnelverkleidung 1 in einer Draufsicht schematisch dargestellt. Die Tunnelverkleidung 1 weist einen vorderen Verkleidungsbereich 1a und einen hinteren Verkleidungsbereich 1b auf. Im eingebauten Zustand ist der vordere Verkleidungsbereich 1a einem Fahrzeugbug und der hintere Verkleidungsbereich 1b einem Fahrzeugheck zugewandt. Eine Fahrzeuglängsrichtung L erstreckt sind vom Fahrzeugheck zum Fahrzeugbug. Die Tunnelverkleidung 1 weist eine trapezförmige Bodenwandung 5 mit einer im vorderen Verkleidungsbereich 1a angeordneten vorderen Grundseite 5a, einem ersten Schenkel 5b, einem zweiten Schenkel 5c sowie einer im hinteren Verkleidungsbereich 1b angeordneten hinteren Grundseite 5d auf. Ein erster Winkel α ist zwischen der vorderen Grundseite 5a und dem ersten Schenkel 5b und ein zweiter Winkel β zwischen der vorderen Grundseite 5a und dem zweiten Schenkel 5c ausgebildet. Der erste Winkel α ist geringfügig größer als der zweite Winkel β. Alternativ können der erste Winkel α und der zweite Winkel β auch gleichgroß ausgebildet sein.

Auf dem ersten Schenkel 5b und dem zweiten Schenkel 5c ist jeweils eine Seitenwand 6 angeordnet, so dass zwischen der Bodenwandung 5 und den Seitenwänden 6 ein zentraler Kanal 7 mit einer Kanalmitte M begrenzt ist. Der zentrale Kanal 7 weist im vorderen Verkleidungsbereich 1a einen ersten Kanalquerschnitt 7a und im hinteren Verkleidungsbereich 1 b einen zweiten Kanalquerschnitt 7b auf. In dieser Ansicht ist erkennbar, dass der zweite Kanalquerschnitt 7b eine größere Breite als der erste Kanalquerschnitt 7a aufweist.

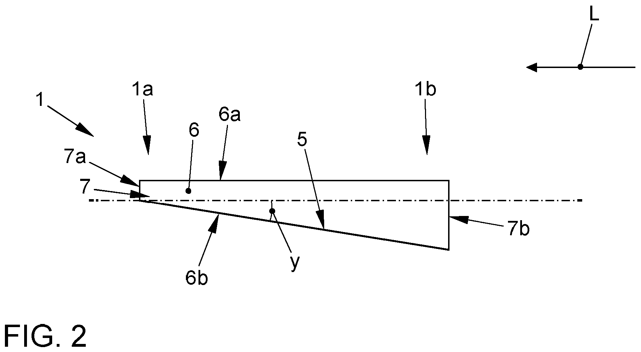

In Fig. 2 ist die bevorzugte erste Ausführungsform der erfindungsgemäßen Tunnelverkleidung 1 in einer entlang der auf der Kanalmitte M verlaufenden Schnittlinie II - II geschnittenen Seitenansicht schematisch dargestellt. Somit ist in Fig. 2 nur eine der zwei Seitenwände 6 abgebildet. Von der Bodenwandung 5 ist nur eine Schnittfläche erkennbar. Die Seitenwand 6 weist eine trapezförmige Hauptfläche auf. Eine Seitenwandoberkante 6a und eine Seitenwandunterkante 6b bilden Schenkel des Trapezes. Die Seitenwand 6 weist im vorderen Verkleidungsbereich 1a eine geringere Höhe als im zweiten Verkleidungsbereich 1b auf. Somit weist der erste Kanalquerschnitt 7a des zentralen Kanals 7 eine geringere Höhe als der zweite Kanalquerschnitt 7b auf. Zwischen der Seitenwandoberkante 6a und der Seitenwandunterkante 6b ist ein spitzer Keilwinkel γ ausgebildet.

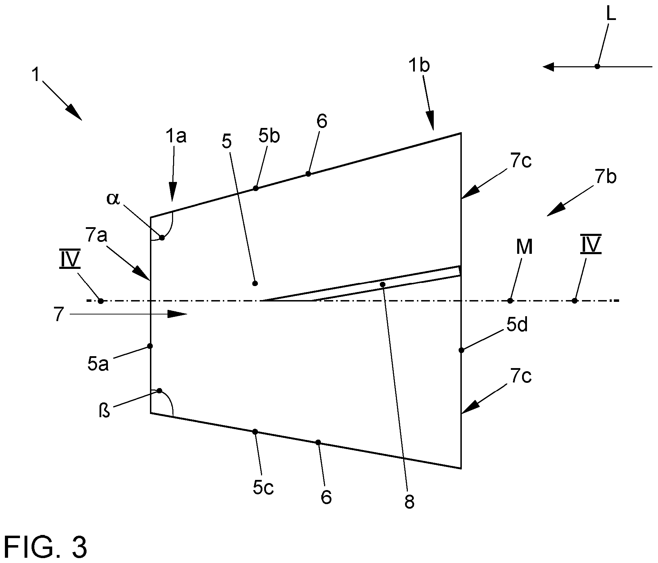

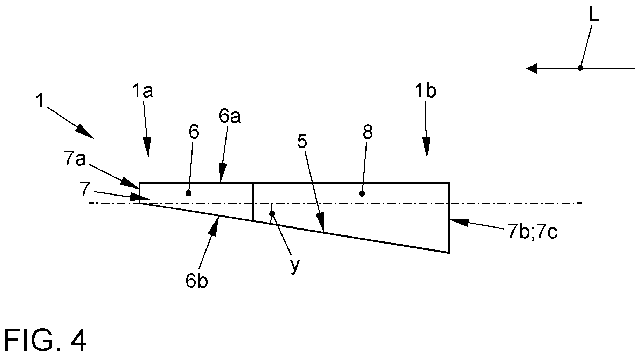

Die in Fig. 3 und Fig. 4 gezeigte bevorzugte zweite Ausführungsform der erfindungsgemäßen Tunnelverkleidung 1 unterscheidet sich von der ersten Ausführungsform lediglich durch ein Umlenkelement 8, das schräg im zentralen Kanal 7 angeordnet ist. Durch das Umlenkelement 8 ist ein Teil eines Kühlungsluftstroms zu einer Seitenwand 6 hin umlenkbar. Erfindungsgemäß können mehrere und/oder anders ausgebildete, wie z.B. Turbinenleitschaufelförmige oder Keilförmige, Umlenkelemente 8 vorgesehen sein, die beispielsweise zum Umlenken des Kühlungsluftstroms zu beiden Seitenwänden 6 oder zur Fahrbahn hin ausgebildet sind.

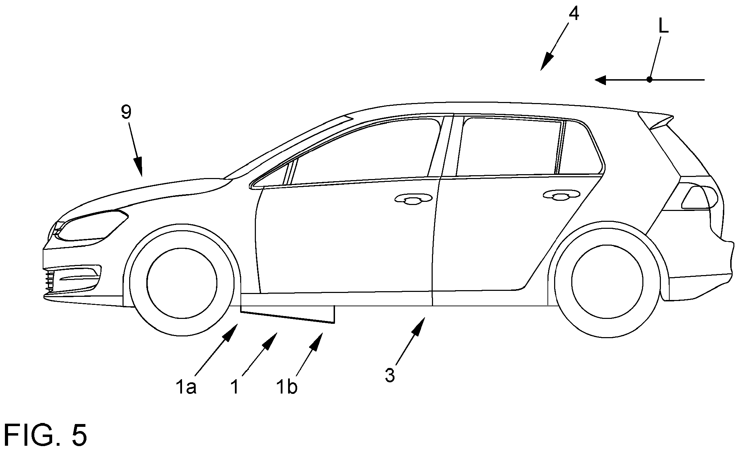

Fig. 5 zeigt ein erfindungsgemäßes Kraftfahrzeug 4 mit einer erfindungsgemäßen Tunnelverkleidung 1 mit einem in Fahrzeuglängsrichtung L vorderen Verkleidungsbereich 1a sowie einem in Fahrzeuglängsrichtung L hinteren Verkleidungsbereich 1 b. Die Tunnelverkleidung 1 ist an einem Unterboden 3 des Kraftfahrzeugs 4 angeordnet bzw. fixiert. Es ist erkennbar, dass die Tunnelverkleidung 1 im hinteren Verkleidungsbereich 1b eine größere Höhe als im vorderen Verkleidungsbereich 1a aufweist. Der zweiter Kanalquerschnitt 7b weist demnach eine größere Höhe als der erste Kanalquerschnitt 7a auf (vgl. Fig. 2 u. Fig. 4). Die Tunnelverkleidung 1 ist somit ausgebildet, einen aus dem Motorraum 9 herausströmenden Kühlungsluftstrom entlang dem Unterboden 3 sowie zumindest einen Teil des Kühlungsluftstroms vom Unterboden 3 zur Fahrbahn hin zu lenken.

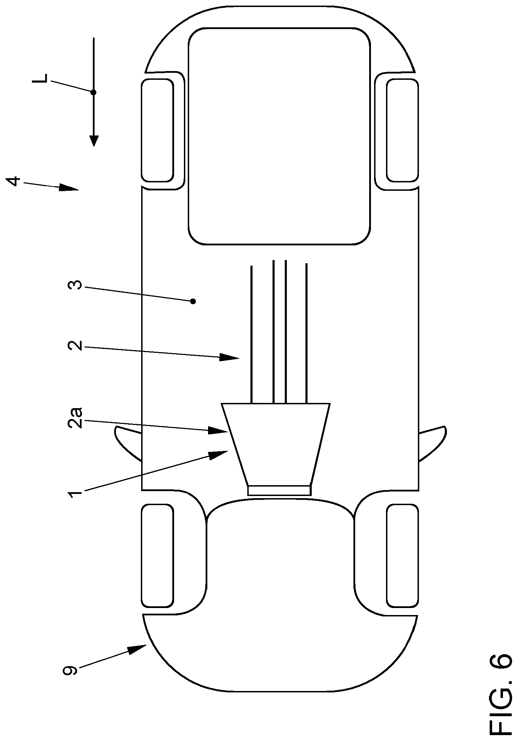

In Fig. 6 ist das erfindungsgemäße Kraftfahrzeug 4 aus Fig. 5 in einer Draufsicht von unten dargestellt. Die Tunnelverkleidung 1 ist an einem vorderen Tunnelbereich 2a eines Abgastunnels 2 im Unterboden 3 des Kraftfahrzeugs 4 angeordnet und verschließt diesen zu einer Seite. Aus Fig. 6 ist ersichtlich, dass die Tunnelverkleidung 1 im hinteren Verkleidungsbereich 1b eine größere Breite als im vorderen Verkleidungsbereich 1a aufweist. Der zweite Kanalquerschnitt 7b weist demnach eine größere Breite als der erste Kanalquerschnitt 7a auf (vgl. Fig. 1 u. Fig. 3). Die Tunnelverkleidung 1 ist somit ausgebildet, einen aus dem Motorraum 9 herausströmenden Kühlungsluftstrom entlang dem Abgastunnel 2 sowie zumindest einen Teil des Kühlungsluftstroms seitlich vom Abgastunnel 2 weg zu lenken.

### Bezugszeichenlist

- 1: Tunnelverkleidung
- 1a: vorderer Verkleidungsbereich
- 1b: hinterer Verkleidungsbereich
- 2: Abgastunnel
- 2a: vorderer Tunnelbereich
- 3: Unterboden
- 4: Kraftfahrzeug
- 5: Bodenwandung
- 5a: vordere Grundseite
- 5b: erster Schenkel
- 5c: zweiter Schenkel
- 5d: hintere Grundseite
- 6: Seitenwand
- 6a: Seitenwandoberkante
- 6b: Seitenwandunterkante
- 7: zentraler Kanal
- 7a: erster Kanalquerschnitt
- 7b: zweiter Kanalquerschnitt
- 7c: Kanalteilquerschnitt
- 8: Umlenkelement
- 9: Motorraum
- α: erster Winkel
- β: zweiter Winkel
- γ: Keilwinkel
- L: Fahrzeuglängsrichtung
- M: Kanalmitte

## Patentansprüche

1. Tunnelverkleidung (1) zum Abdecken eines in Fahrzeuglängsrichtung (L) vorderen Tunnelbereichs (2a) eines Abgastunnels (2) eines Unterbodens (3) eines Kraftfahrzeugs (4) zur Strömungskontrolle des Kraftfahrzeugs (4) mit einem in Fahrzeuglängsrichtung (L) vorderen Verkleidungsbereich (1a) sowie einem in Fahrzeuglängsrichtung (L) hinteren Verkleidungsbereich (1b), aufweisend eine im eingebauten Zustand dem Unterboden (3) zugewandte Bodenwandung (5) sowie mindestens zwei auf der Bodenwandung (5) angeordnete Seitenwände (6), wobei durch die Seitenwände (6) und die Bodenwandung (5) ein zentraler Kanal (7) begrenzt ist, wobei ein erster Kanalquerschnitt (7a) des zentralen Kanals (7) in dem vorderen Verkleidungsbereich (1a) kleiner als ein zweiter Kanalquerschnitt (7b) des zentralen Kanals (7) in dem hinteren Verkleidungsbereich (1b) der Tunnelverkleidung (1) ausgebildet ist,
**dadurch gekennzeichnet,**
**dass** die Bodenwandung (5) eine trapezförmige oder im Wesentlichen trapezförmige Grundfläche mit zwei Schenkeln (5b, 5c) und zwei parallelen Grundseiten (5a, 5d) aufweist, wobei die Seitenwände (6) an den Schenkeln angeordnet sind, und wobei ein erster Winkel (α) zwischen einer im vorderen Verkleidungsbereich (1a) angeordneten vorderen Grundseite (5a) und einem ersten Schenkel (5b) größer als ein zweiter Winkel (β) zwischen der vorderen Grundseite (5a) und einem zweiten Schenkel (5c) ist.

2. Tunnelverkleidung (1) nach Anspruch 1,
**dadurch gekennzeichnet,**
**dass** der erste Kanalquerschnitt (7a) eine geringere Breite als der zweite Kanalquerschnitt (7b) aufweist.

3. Tunnelverkleidung (1) nach Anspruch 1 oder 2,
**dadurch gekennzeichnet,**
**dass** der erste Winkel (α) zwischen 90° und 117° und der zweite Winkel (β) zwischen 90° und 110° beträgt.

4. Tunnelverkleidung (1) nach einem der vorangegangenen Ansprüche,
**dadurch gekennz ichn t,**
dass der erste Kanalquerschnitt (7a) eine geringere Höhe als der zweite Kanalquerschnitt (7b) aufweist.

5. Tunnelverkleidung (1) nach Anspruch 4,
**dadurch gekennzeichnet,**
**dass** die Seitenwände (6) jeweils eine der Bodenwandung (5) abgewandte Seitenwandoberkante (6a) und eine auf der Bodenwandung (5) angeordnete Seitenwandunterkante (6b) aufweisen, wobei die Seitenwandoberkante (6a) und die Seitenwandunterkante (6b) einen Keilwinkel (γ) zwischen 0° und 7° zueinander aufweisen und sich vom vorderen Verkleidungsbereich (1a) zum hinteren Verkleidungsbereich (1 b) hin voneinander entfernen, und/oder dass der zweite Kanalquerschnitt (7b) eine Höhe aufweist, die zwischen 4 cm und 6 cm größer eine Höhe des ersten Kanalquerschnitt (7a) ist.

6. Tunnelverkleidung (1) nach einem der vorangegangenen Ansprüche,
**dadurch gekennzeichnet,**
**dass** innerhalb des zentralen Kanals (7) mindestens ein Umlenkelement (8) zum Umlenken eines Kühlungsluftstroms in Richtung mindestens einer Seitenwand (6) angeordnet ist.

7. Tunnelverkleidung (1) nach Anspruch 6,
**dadurch gekennzeichnet,**
**dass** ein dem vorderen Verkleidungsbereich (1a) zugewandter Anfang des Umlenkelements (8) in einer Kanalmitte (M) des zentralen Kanals (7) und ein dem hinteren Verkleidungsbereich zugewandtes Ende des Umlenkelements (8) von der Kanalmitte (M) beabstandet sind.

8. Kraftfahrzeug (4) mit einem Unterboden (3) und einem zentral in dem Unterboden (3) angeordneten Abgastunnel (2),
**dadurch gekennzeichnet,**
**dass** an einem in Fahrzeuglängsrichtung (L) vorderen Tunnelbereich (2a) des Abgastunnels (2) eine Tunnelverkleidung (1) nach einem der Ansprüche 1 bis 7 angeordnet ist.

9. Kraftfahrzeug (4) nach Anspruch 8,
**dadurch gekennzeichn t,**
dass ein vorderer Verkleidungsbereich (1a) der Tunnelverkleidung (1) an einem vorderen Hilfsrahmen (9) des Kraftfahrzeugs (4) angeordnet ist.

## Claims

1. Tunnel lining (1) for covering a tunnel region (2a), which is at the front in a vehicle longitudinal direction (L), of an exhaust tunnel (2) of an underbody (3) of a motor vehicle (4) for flow control of the motor vehicle (4), having a front lining region (1a) which is at the front in the vehicle longitudinal direction (L) and also a rear lining region (1b) which is at the rear in the vehicle longitudinal direction (L), and having a bottom wall (5) which faces the underbody (3) in the installed state and also at least two side walls (6) which are arranged on the bottom wall (5), wherein a central duct (7) is delimited by the side walls (6) and the bottom wall (5), wherein a first duct cross section (7a) of the central duct (7) in the front lining region (1a) is configured to be smaller than a second duct cross section (7b) of the central duct (7) in the rear lining region (1b) of the tunnel lining (1),
**characterized**
**in that** the bottom wall (5) has a trapezoidal or substantially trapezoidal base area with two legs (5b, 5c) and two parallel base sides (5a, 5d), wherein the side walls (6) are arranged on the legs, and wherein a first angle (α) between a front base side (5a), which is arranged in the front lining region (1a), and a first leg (5b) is greater than a second angle (β) between the front base side (5a) and a second leg (5c).

2. Tunnel lining (1) according to Claim 1,
**characterized**
**in that** the first duct cross section (7a) has a smaller width than the second duct cross section (7b).

3. Tunnel lining (1) according to Claim 1 or 2,
**characterized**
**in that** the first angle (α) is between 90° and 117° and the second angle (β) is between 90° and 110°.

4. Tunnel lining (1) according to one of the preceding claims,
**characterized**
**in that** the first duct cross section (7a) has a smaller height than the second duct cross section (7b).

5. Tunnel lining (1) according to Claim 4,
**characterized**
**in that** the side walls (6) each have a side wall top edge (6a) which faces away from the bottom wall (5) and a side wall bottom edge (6b) which is arranged on the bottom wall (5), wherein the side wall top edge (6a) and the side wall bottom edge (6b) have a wedge angle (γ) of between 0° and 7° relative to one another and move away from one another in the direction from the front lining region (1a) towards the rear lining region (1b), and/or in that the second duct cross section (7b) has a height which is between 4 cm and 6 cm greater than a height of the first duct cross section (7a).

6. Tunnel lining (1) according to one of the preceding claims,
**characterized**
**in that** at least one deflecting element (8) for deflecting a cooling air flow in the direction of at least one side wall (6) is arranged within the central duct (7).

7. Tunnel lining (1) according to Claim 6,
**characterized**
**in that** a beginning of the deflecting element (8), said beginning facing the front lining region (1a), in a duct centre (M) of the central duct (7) and an end of the deflecting element (8), said end facing the rear lining region, are spaced apart from the duct centre (M).

8. Motor vehicle (4) having an underbody (3) and an exhaust tunnel (2) which is arranged centrally in the underbody (3),
**characterized**
**in that** a tunnel lining (1) according to one of Claims 1 to 7 is arranged on a front tunnel region (2a), which is at the front in the vehicle longitudinal direction (L), of the exhaust tunnel (2).

9. Motor vehicle (4) according to Claim 8,
**characterized**
**in that** a front lining region (1a) of the tunnel lining (1) is arranged on a front auxiliary frame (9) of the motor vehicle (4).

## Revendications

1. Habillage formant tunnel (1) destiné à recouvrir une zone formant tunnel avant (2a), par référence à la direction longitudinale de véhicule (L), d'un tunnel de gaz d'échappement (2) d'un dessous de caisse (3) d'un véhicule automobile (4) et à commander l'écoulement du véhicule automobile (4) muni d'une zone d'habillage avant (1a), par référence à la direction longitudinale de véhicule (L), ainsi que d'une zone d'habillage arrière (1b), par référence à la direction longitudinale de véhicule (L), ledit habillage formant tunnel comportant une paroi de dessous (5) dirigée vers le dessous de caisse (3) à l'état installé et au moins deux parois latérales (6) disposées sur la paroi de dessous (5), un canal central (7) étant délimité par les parois latérales (6) et la paroi inférieure (5), une première section transversale de canal (7a) du canal central (7) dans la zone d'habillage avant (1a) étant inférieure à une deuxième section transversale de canal (7b) du canal central (7) dans la zone d'habillage arrière (1b) de l'habillage formant tunnel (1),
**caractérisé en ce que**
la paroi de dessous (5) comporte une zone de base trapézoïdale ou sensiblement trapézoïdale pourvue de deux branches (5b, 5c) et de deux côtés de base parallèles (5a, 5d), les parois latérales (6) étant disposées au niveau des branches, et un premier angle (α) formé entre un côté de base avant (5a) disposé dans la zone d'habillage avant (1a) et une première branche (5b) étant supérieur à un deuxième angle (β) formé entre le côté de base avant (5a) et une deuxième branche (5c).

2. Habillage formant tunnel (1) selon la revendication 1,
**caractérisé en ce que**
la première section transversale de canal (7a) a une largeur inférieure à la deuxième section transversale de canal (7b).

3. Habillage formant tunnel (1) selon la revendication 1 ou 2,
**caractérisé en ce que**
le premier angle (α) est compris entre 90° et 117° et le deuxième angle (β) est compris entre 90° et 110°.

4. Habillage formant tunnel (1) selon l'une des revendications précédentes,
**caractérisé en ce que**
la première section transversale de canal (7a) a une hauteur inférieure à la deuxième section transversale de canal (7b).

5. Habillage formant tunnel (1) selon la revendication 4,
**caractérisé en ce que**
les parois latérales (6) comportent chacune un bord de paroi latérale supérieur (6a) opposé à la paroi de dessous (5) et un bord de paroi latérale inférieur (6b) disposé sur la paroi de dessous (5), le bord de paroi latérale supérieur (6a) et le bord de paroi latérale inférieur (6b) formant un angle de coin (γ) compris entre 0° et 7° l'un par rapport à l'autre et s'éloignant l'un de l'autre depuis la zone d'habillage avant (1a) vers la zone d'habillage arrière (1b), et/ou **en ce que** la deuxième section transversale de canal (7b) a une hauteur qui est entre 4 cm et 6 cm supérieure à une hauteur de la première section transversale de canal (7a).

6. Habillage formant tunnel (1) selon l'une des revendications précédentes,
**caractérisé en ce que**
au moins un élément de déviation (8) est disposé dans le canal central (7) afin de dévier un flux d'air de refroidissement en direction d'au moins une paroi latérale (6).

7. Habillage formant tunnel (1) selon la revendication 6,
**caractérisé en ce que**
le début de l'élément de déviation (8), qui est dirigé vers la zone d'habillage avant (1a), dans un centre de canal (M) du canal central (7) et une extrémité de l'élément de déviation (8), qui est dirigée vers la zone d'habillage arrière, sont espacés du centre de canal (M).

8. Véhicule automobile (4) comprenant un dessous de caisse (3) et un tunnel de gaz d'échappement (2) disposé centralement dans le dessous de caisse (3),
**caractérisé en ce que**
un habillage formant tunnel (1) selon l'une des revendications 1 à 7 est disposé au niveau d'une zone de tunnel avant (2a), par référence à la direction longitudinale de véhicule (L), du tunnel de gaz d'échappement (2).

9. Véhicule automobile (4) selon la revendication 8,
**caractérisé en ce que**
une zone d'habillage avant (1a) de l'habillage formant tunnel (1) est disposée au niveau d'un faux-châssis avant (9) du véhicule automobile (4).
